# EUROPEAN PATENT APPLICATION

(11) **EP 0 543 483 A1**
(43) Date of publication of application: **26.05.1993**
(21) Application number: 92307815.8
(22) Date of filing: 27.08.1992
(51) Int. Cl.: B60R 16/02

(54) **Optically coupled steering wheel switching assembly and method**

(30) Priority: 12.11.1991 US 791587
(71) Applicant: PACCAR INC., Bellevue, WA 98004 (US)
(72) Inventor: Briski, Tony M., Pleasanton, California 94588 (US); Wheelock, Glenn E., Fremont, California 94538 (US)
(74) Representative: Jackson, David Spence

(57) **Abstract**

An electro-optical control assembly for control of vehicle electrical components (28), such as radios, heaters, wipers and the like, from steering wheel-mounted switches (23a, 23b). The control assembly includes an optical signal generating assembly (26a) which produces an encoded optical signal that is transmitted across a gap (54) between the steering wheel (22) to a stationary portion (39) of the vehicle. An optical collector, preferably an annular lens (58), receives the optical signal which is transmitted by fiber optic bundle (41) to an optical signal decoder (26b). The decoder (26b) is electrically coupled to a power distribution assembly (27), usually relay drivers (35) and relays (40) which actuate or change the function of the controlled vehicle component (28).

## Description

### TECHNICAL FIELD

In general, the present invention relates to steering wheel-mounted switching assemblies for vehicles, and more particularly, relates to apparatus and methods for coupling such switching assemblies to components in the vehicle which are to be controlled by the switching assemblies.

### BACKGROUND ART

Today's vehicles have a number of electrically powered or controlled devices or components that are manually controlled by operation of switches by the driver and/or passengers. These devices include the radio, windshield wipers, door locks, turn signals, emergency signal, heating and air conditioning, etc. As the number of devices or components increases, the number of control switches similarly increases, and the complexity of driving, while controlling these components, increases proportionally.

Initially and in most vehicles today, the only means of controlling these electrical components was the switch assemblies provided on the components themselves. As a result, a driver was required to divert attention from driving to adjust a particular device. This approach is cumbersome and potentially hazardous for drivers, and the problem is particularly acute for truck drivers that typically have many more devices and control switches in their cab than the average automobile.

To create a more ergonomical driving cab, vehicle component control switches have been mounted on the steering wheel itself. This approach has several advantages. For example, "thumb" switches can be installed in a location convenient to the driver, and thus the driver's hand need not leave the steering wheel to control a peripheral vehicle component.

Additionally, the driver's attention is not diverted to different locations inside the cab while driving and controlling various devices. Instead, the driver's attention is maintained in a generally straight-ahead orientation aligned with the path of travel where the road, the steering wheel and many important gauges (speedometer, tachometer, oil pressure, etc.) may be seen. Thus, a driver can effect component switching while, simultaneously, performing crucial real-time driving and monitoring tasks.

Various implementations of steering wheel mounting of switching assemblies have been tried. One implementation incorporates the use of electrical wires or a conductor cable. Such a cable is coupled to the switches on the rotatable portion of the steering wheel at one end; while, at the other end, the cable is coupled to a component or a power distribution control assembly anchored on a stationary portion of the vehicle. The problem with this implementation, however, is that this cable must be capable of accommodating rotation of the steering wheel. This is usually accomplished by a coupling assembly, such as a retractable reel, on which the electrical wire or cable is mounted. As the steering wheel is rotated in one direction, wire is paid-out off the reel, and as the steering wheel rotates in the opposite direction, the wire is retracted onto the reel. For automobiles, which typically require less than two turns of the steering wheel to swing from one extreme to the other, this approach can be acceptable for a limited number of switches and electrical wires. For trucks, which can require four steering wheel rotations to turn from one extreme to the other, the reel assemblies are not very practical, particularly as the number of components being controlled through the cable increases. Moreover, mechanical cable deploying reel systems are more prone to mechanical reliability problems.

A second approach which has been taken to coupling steering wheel switches to vehicle components involves the use of electrical brushes. These brushes are mounted on one side of the steering wheel and the steering wheel column. As the wheel is turned, the brushes wipe or make physical and electrical contact with conductors that transmit the electrical signals from the switches to the components being controlled. Such brush-based coupling systems, however, require sufficient space that only a limited number of switches can be mounted on the steering wheel, and as with the cable systems, reliability problems can be encountered.

Accordingly, it is the object of the present invention to provide an optical coupling for a switching assembly that does not rely on moving mechanical components or physical contact to transmit the switching signals.

A further object is to provide a switch coupling assembly for steering wheel-mounted switches that allows for an arbitrary number of turns of the steering wheel.

Another object of the present invention is to provide a coupling assembly for steering wheel-mounted switches which is durable, can be retro-fit to existing vehicles, and has a minimum number of components.

The optically coupled steering wheel switching assembly and method of the present invention has other objects and advantageous features which will become apparent from, and are set forth in more detail in, the description of the Best Mode of Carrying Out the Invention and the accompanying drawings.

### DISCLOSURE OF THE INVENTION

The electro-optical control assembly of the present invention includes a plurality of manually engageable switches mounted on a rotatable portion of the steering wheel, a control assembly mounted on a stationary portion of the vehicle, and signal communication coupling extending between the switches and the control assembly for communication of input signals from the switches to electrically powered or controlled components. The improvement in the present invention is comprised, briefly, of an optical coupling which communicates the switch signals across a gap between the rotatable portion of the steering wheel and the stationary portion of the vehicle for all angular positions of the steering wheel. In the preferred form a near infrared light emitting diode is used to communicate encoded optical signals to a receiving annular line that, in turn, is coupled by a fiber optic transmission line to an optical decoder assembly.

### BRIEF DESCRIPTION OF THE DRAWING

FIGURE 1 is a schematic side elevation view of an optically coupled steering wheel switch assembly constructed in accordance with the present invention.

FIGURE 2 is an enlarged front elevation view of the steering wheel of FIGURE 1.

FIGURE 3 is an enlarged, fragmentary side elevation view, in cross-section, of the area substantially bounded by line 3-3 in FIGURE 2.

FIGURE 3A is an enlarged, fragmentary side elevation view, in cross-section, corresponding to FIGURE 3 of an alternative embodiment of the optically coupled switch assembly.

FIGURE 4 is a block diagram of the optically coupled steering wheel switching apparatus of the present invention.

FIGURE 5 is a schematic representation of a relay assembly suitable for use with the optically coupled switch assembly of the present invention.

### BEST MODE OF CARRYING OUT THE INVENTION

The electro-optical control assembly of the present invention employs optical coupling to communicate the switch signals across a gap between a rotatable part of a vehicle steering wheel and a stationary part of the vehicle, usually a stationary portion of the steering column. The use of optical coupling avoids the need to employ mechanical cable reels or electric brush assemblies, both of which have a lower reliability.

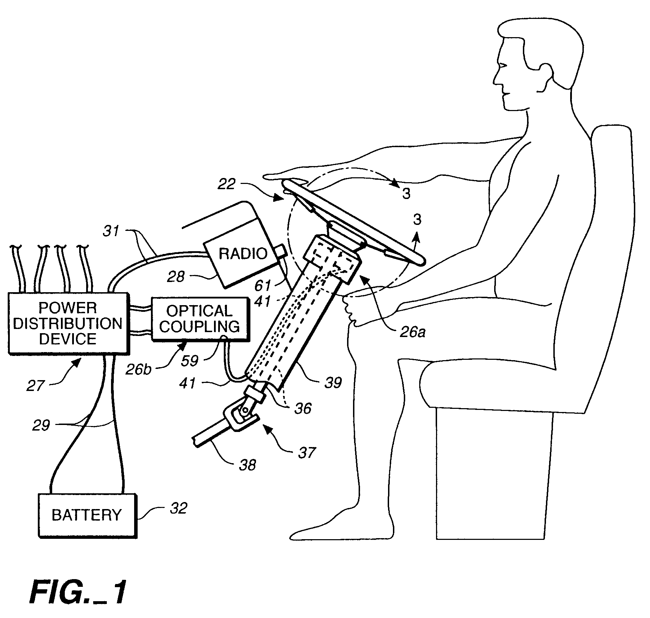

FIGURE 1 illustrates a typical steering wheel assembly, generally designated 22, incorporating a plurality of manually engageable component control switches 11, as it would be viewed from the driver's perspective. Switches 23a, 23b are mounted on rotatable portion of the steering wheel 22, in this case transversely extending spoke portion 21, for easy access by the driver. When the driver desires to control a particular vehicle component, such as the radio, he or she need only actuate the correct switch without taking his or her hand from the steering wheel.

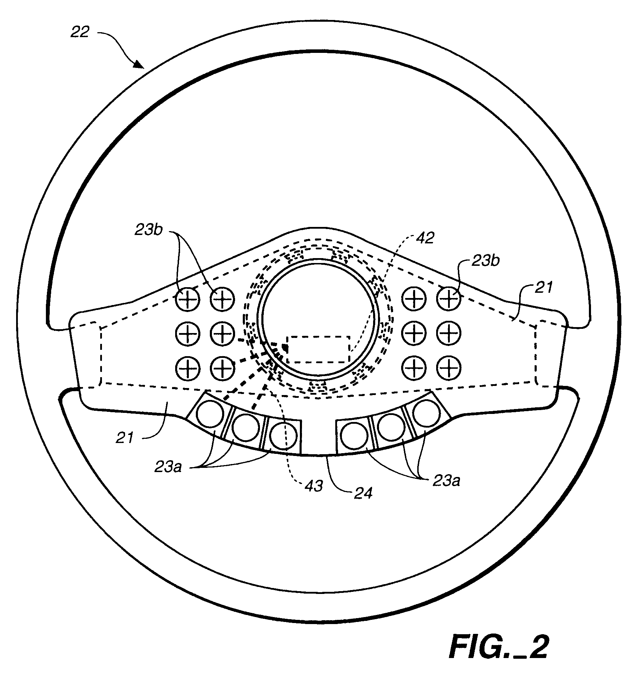

Referring now to FIGURES 1 and 2, an electro-optical control assembly for a vehicle, such as a truck, car, boat, airplane or the like is shown. Mounted on the transversely extending spoke assembly or horn bar 21 of a steering wheel, generally designated 22, are a plurality of electrical control switches 23a and 23b. Switches 23a are "thumb switches" which are disposed for manual actuation by the driver's thumb along a lower edge 24 of spoke assembly 21, while switches 23b are manually engageable, usually by the driver's fingers. Electrical control switches 23a and 23b can take a number of different forms and their construction and operation do not form a novel portion of the present invention.

As will be apparent from FIGURE 2 control switches 23a and 23b are mounted for rotation with vehicle steering 22 in order to afford the driver a very convenient and ergonomic switch assembly that allows control of various electrically powered and/or controlled components or apparatus in the vehicle. A typical control switch suitable for use in the control assembly of the present invention is a Model DA3C-DIAA Switch manufactured by The Cherry Switch Company.

In FIGURE 1 it will be seen that optical coupling means 26a and 26b are provided for communicating switch signals from steering wheel 22 to control means, generally designated 27, for vehicle electrically powered or controlled components 28, which is illustrated as a radio. Control means 27 can take the form of a power distribution device, such as a relay driver and relay assembly, electrically coupled by conductors 29 and 31 between vehicle battery 32 and the vehicle components, such as radio 28.

In the steering wheel assembly of FIGURE 1, steering wheel 22 is mechanically coupled to rotate an upper steering linkage rod or member 36, which is coupled by universal joint 37 to rotate lower steering linkage rod member 38. Mounted concentrically about rotatable steering rods 36 and 38 is a stationary tubular steering column member 39, and optical coupling means 26a may advantageously be mounted to the inside of stationary, tubular, column member 39. The exact construction of the steering linkage assembly and column is not, however, critical to the present invention. Various assemblies can have the optical coupling system of the present invention mounted thereto, and in some steering columns the rotatable linkages are exposed or not surrounded by a stationary sleeve or tube 39. Moreover, the optical system of the present invention is adaptable for use with length-adjustable and tiltable steering columns.

In order to connect optical coupling means 26a with optical coupling means 26b, it is preferable that light transmission means 41, such as a fiber optic cable, bundle or light pipe, be connected between optical assemblies 26a and 26b. Transmission means 41 is mounted to stationary tubular column 39 and extends to a stationary portion of the vehicle, for example, to proximate power distribution assembly 27.

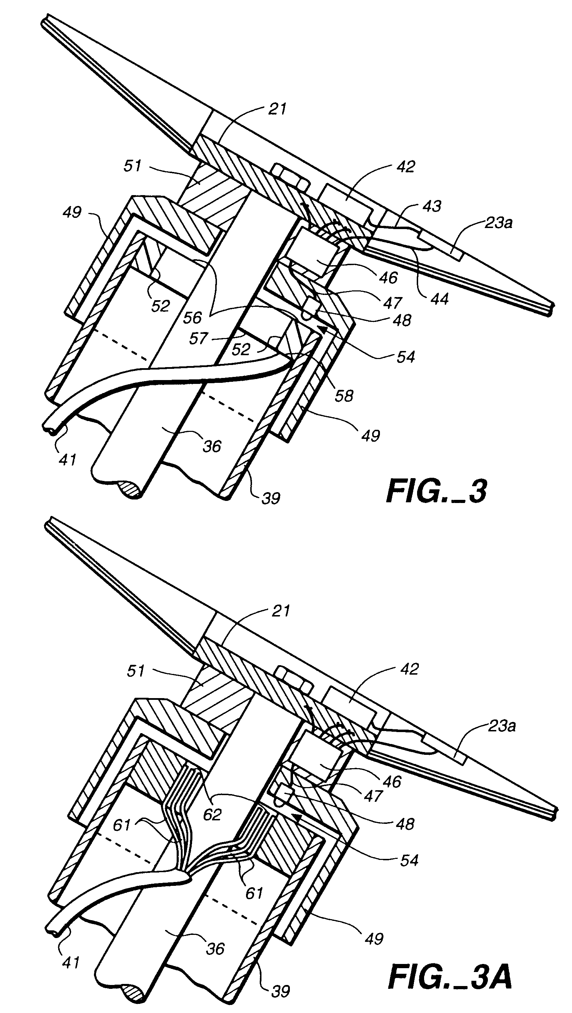

Communication of switch signals from switches 23a, 23b to components 28 using the optical coupling apparatus of the present invention can be described in detail by reference to FIGURE 3. A thumb switch 23a is shown electrically coupled by conductor 43 to a battery 42 used to power the steering wheel-mounted switches and optical coupling system of the present invention. Switch 23a in turn is electrically connected by conductor 44 to optical driver means 46, such as an emitter actuator and optical encoder similar to the infrared actuator/encoders widely used for remote control of television sets and VCRs. Electrically connected by conductor 47 to actuator and encoder 46 is a light emitter 48, most preferably a near-infrared emitting diode (NIRED). Motorola models MLED 71, MLED 76 and MLED 77 infrared emitting diodes are suitable for this application. All of these components are carried by a rotatable portion of steering wheel 22. Thus, NIRED 48 is mounted to rotatable inverted cup member 49 which is secured to collar member 51 mounted on upper steering link rod 36. As used herein, "near-infrared" shall mean optical irradiation having a wavelength in the range of about 600 to about 1000 nanometers.

In order to enable communication of switch signals to components 28 for any and all angular positions of steering wheel 22, the optical coupling means of the present invention includes a light collector means positioned on a relatively stationary portion of the vehicle. In FIGURE 3 light collector 52 is provided as an annular lens mounted concentrically relative to the steering wheel steering column. More particularly annular lens 52 is mounted to the upper end of tubular steering column member 39 in a position generally axially aligned with emitter 48. Thus, an air gap 54 exists between NIRED 48 and lens 52 across which optical signals, and preferably encoded optical signals, are communicated.

As steering wheel 22 is rotated emitter 48 is swung in a circle about steering link rod 36 and remains aligned with an upwardly facing annular edge 56 of lens 52. Light signals striking edge 56 of lens 52 will enter the lens and then be reflected back and forth between opposed edges of the lens until the light signals have been propagated completely around the circumference of the lens. Optically coupled, virtually anywhere around lower edge 57 of lens 52, is an upper end 58 of optic transmission means 41. Thus, the optical signal received by lens 52 is communicated to optical transmission lens 41 and enters the line through end 58.

As illustrated in FIGURE 1 the opposite end 59 of optical transmission line 41 extends into optical coupling means 26b. In the preferred form optical coupling means 26b is an optical decoder powered by vehicle battery 32 that responds to a received optical signal by generating an electrical signal, and most preferably an encoded electrical signal which will actuate a selected one of a plurality of relay drivers and associated relays making up power distribution assembly 27. Again, decoders similar to those widely employed in television and VCR remote systems can be employed. It will be understood, however, that some electrically powered vehicle components 28 include optical decoder assemblies as an integral portion of the assembly. Thus, radios 28 are commercially available which would permit optical transmission line 41 to be optically coupled directed to a decoder 266 mounted in radio 28 to thus bypass the power distribution relay assembly 27.

It also will be understood that while encoded electrical and optical signals are preferred to enable the control of a multiplicity of vehicle components and a variety of functions (volume, station, speakers, etc.) of such components, the optical coupling system of the present invention can be used with uncoded signals that merely change the state of a controlled component or step through a series of preprogrammed options.

Optic system power source 42 can be a 9-volt dry cell battery carried by the hub of the steering wheel to provide the power to drive switches 23a and 23b, encoder 46, and emitter 48. The expected life of battery 42 depends primarily upon the power demands of encoder 46 and light emitter 48. The power demand varies in part depending upon the wavelength and the light source chosen to communicate the switch signals. In the preferred embodiment, infrared, and most preferably near-infrared, light is employed and generated by a low-power light emitting diode. With an infrared or near-infrared light emitting diode 48, the power requirement is sufficiently low that a standard 3 to 9 volt dry cell battery pack, mounted on the rotatable portion of the steering wheel, need not be replaced for up to two years of normal operation. Use of optical signals in these wavelengths should not be construed as a limitation upon the invention, since other optical wavelengths can provide the necessary mechanism to communicate the switch signals across gap 54. Additionally, encoded near-infrared optic signals are relatively impervious to interference from spuriously generated interference. Cup member 49 acts as a shield and reduces the chances of lens 52 "seeing" spurious infrared signals, and when encoded the chance of a spurious encoded near-infrared signal being received by lens 52 is essentially nil.

In an alternative embodiment of the optical coupling apparatus of the present invention, a light collector is employed which is comprised of a set of closely circumferentially spaced fiber optic strands 61, as shown in FIGURE 3A. The spacing of said strands is that at least one strand 61 will see the emitter optical signal for all angular positions of steering wheel 22. NIRED 48 will normally have a lens which causes some dispersion of the optical signal. Thus, the light signal will spread sufficiently so that ends 62 of strands 61 need not be abutting to pick up the signal. Usually, several strands will receive transmitted signals across gap 54 for any position of emitter 48. Thus, the optic signal is communicated from a rotatable position of the steering wheel to a stationary portion of the vehicle for every angular position of light emitter 48.

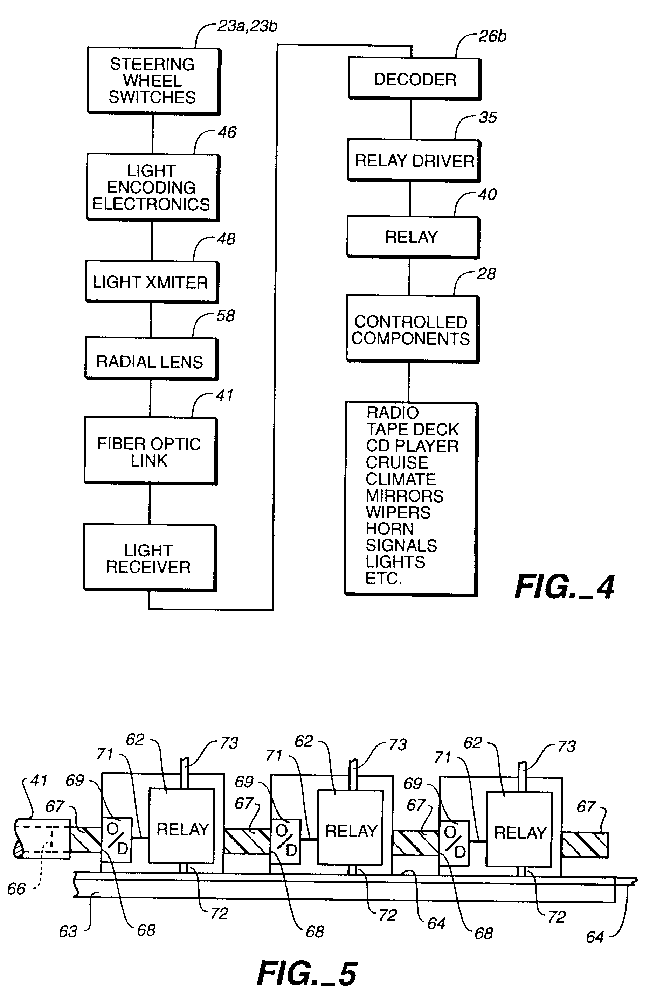

Referring now to FIGURE 4, the method of the present invention can be described. Manual engagement of a selected steering wheel switch 23a, 23b will produce an electrical switch signal which is to be communicated to activate or change the function of one of vehicle components 28. Light encoding device 46 is responsive to the electrical switch signal to drive NIRED 48 to produce an encoded optical signal, which is communicated across gap 54 between the rotatable and stationary portions of the steering wheel. In the method of the present invention, therefore, an encoded optical signal is generated and transmitted from the rotatable steering wheel 22 to a stationary portion of the vehicle, here an optic collector lens 58 mounted on stationary steering column member 36. The optic signal is communicated by optic transmission line 41 to optic signal decoder 26b. Signal Decoder 26b transforms the encoded light signal into an electrical signal, which is communicated to relay driver 35. Relay driver 35 then controls relay 40, which sends the electrical control signal to the appropriate electrically controlled or powered component 28.

In the preferred embodiment, electrically controlled components 28 have their own, independent and redundant means of control, apart from the electro-optical control assembly of the present invention, for example switch 61 on radio 28. This redundancy of control avoids situations in which optic signal generating battery 42 becomes discharged or some other failure of the control assembly occurs. In such cases, each electrically controlled component may still function as designed, even without the control assembly.

As noted above optic transmission line 41 can extend directly to components 28 if they have optical decoding capacity. FIGURE 5 illustrates a further alternative embodiment in which power distribution means 27 is comprised of a plurality of relay driver/relay circuits 62 mounted to power distribution panel 63 to receive power through conductor 64 from vehicle battery 32. Relays such as the Potter & Brumfield Model No. VF4-15 F11 relay are suitable for use in the apparatus of the present invention. Optical transmission cable 41 is coupled to an input edge 66 of an optical lens 67. Lens 67 extends to each relay in the panel and has an input edge 68 aligned with an optical decoder ("O/D") 69 at each relay.

Encoded optical signals, therefore, are transmitted to each relay by reflecting off the various internal surfaces of the lens. Relay optical decoders 69 look for the presence of an encoded signal corresponding to their pre-encoded criteria. If such a signal is present, the encoder actuates corresponding relay 62 through conductor 71 and power is passed through conductors 72 and 73 to the controlled component or a component function is changed.

## Claims

1. An electro-optical control assembly for use in a vehicle having a steering wheel assembly, said control assembly comprising:
manually engageable switch means mounted on a rotatable portion of said steering wheel assembly and generating a control input signal in response to manual engagement of said switch means;
control means mounted on a stationary portion of said vehicle and responsive to said input signal to control at least one electrically powered component in said vehicle; and
optical coupling means coupled to said switch means and to said control means, said optical coupling means communicating said input signal from said switch means across a gap between said rotatable portion of said steering wheel assembly and a stationary portion of said vehicle to said control means for all angular positions of said rotatable portion of the steering wheel assembly.

2. The electro-optical control assembly as defined in claim 1 wherein,
said optical coupling means includes a battery carried by said rotatable portion of said steering wheel assembly and electrically coupled to said switch means.

3. The electro-optical control assembly as defined in claim 2 wherein,
said optical coupling means communicates infrared optical signals across said gap.

4. The electro-optical control assembly as defined in claim 2 wherein, said optical coupling means includes:
encoding means mounted on said rotatable portion of said steering wheel assembly, said encoding means receiving an electrical input signal from said switch means and generating an encoded signal; and
light emitter means mounted on said rotatable portion of said steering wheel assembly and electrically coupled to said encoding means, said light emitter means being responsive to said electrical signal to generate an encoded optical signal for transmission across said gap.

5. The electro-optical control assembly as defined in claim 4 wherein, said optical coupling means further includes:
light collector means mounted on a stationary portion of said steering wheel assembly, said light collector means receiving said encoded optical signal from said emitter means from all angular positions of said rotatable portion of said steering wheel assembly; and
light transmission means coupled to said light collector means for receipt of said encoded optical signal therefrom, said light transmission means being responsive to said encoded optical signal to produce an electrical control signal and being connected to said control means for input of said electrical control signal thereto for the purpose of controlling an identified electrically powered component in said vehicle.

6. The electro-optical control assembly as defined in claim 5 wherein,
said light emitter means generates infrared optical signals.

7. The electro-optical control assembly as defined in claim 5 wherein,
said light emitter means generates optical signals in the near infrared range.

8. The electro-optical control assembly as defined in claim 5 wherein,
said light transmission means includes a fiber optic transmission line optically coupled to said light collector means and a signal decoder optically coupled to said fiber optic transmission line and responsive to receipt of encoded optical signals to produce said electrical control signal.

9. The electro-optical control assembly as defined in claim 8 wherein,
said control means includes relay driver means electrically connected to said signal decoder for receipt of said electrical signal therefrom, and relay means electrically connected to said relay driver and electrically connected to said electrically powered component in said vehicle.

10. The electro-optical control assembly as defined in claim 2 wherein said
electrically powered component includes component control means independent of said control means of said electro-optical assembly, and
said electrically powered component is electrically connected to a power source independent of said battery in said electro-optical control assembly for operation of said electrically powered component by a selected one of said electro-optical control assembly and said component control means.

11. In an electrical control assembly for a vehicle having a rotatable steering wheel, said control assembly including manually engageable switch means mounted to said steering wheel for rotation therewith, control means mounted on a stationary portion of said vehicle and responsive to input signals to control at least one electrically controlled component in said vehicle, and signal communication means extending between said switch means and said control means for communication of input signals from said switch means to said control means, the improvement in said control assembly comprising:
said signal communication means including an optical coupling means communicating input signals across a gap between said steering wheel and a stationary portion of said vehicle for all angular positions of said steering wheel.

12. The electrical control assembly as defined in claim 11 wherein,
said signal communication means includes a battery carried by said steering wheel.

13. The electrical control assembly as defined in claim 12 wherein,
said signal communication means includes light emitter means mounted on said steering wheel, and a circumferentially extending light collector means mounted to said stationary portion of said vehicle proximate said emitter means to define said gap therebetween.

14. The electrical control assembly as defined in claim 13 wherein,
said light collector means is provided by an annular lens mounted concentrically relative to a stationary portion of a steering wheel column of said vehicle, and
said light emitter means is oriented to emit light in a direction generally oriented along said steering column and toward said annular lens.

15. The electrical control assembly as defined in claim 13 wherein,
said light collector means is provided by a plurality of fiber optic strands having ends mounted in side-by-side relation around the entire circumference of a stationary portion of a steering wheel column of said vehicle, and
said light emitter means is oriented to emit light in a direction along said column and toward said ends of said fiber optic strands.

16. The electrical control assembly as defined in claim 13 wherein,
said electrical control assembly is used to control a plurality of electrically controlled components in said vehicle,
said switch means includes a plurality of manually engageable electrical switches each electrically coupled to said battery and each producing an identifiable electrical switch signal when manually engaged,
said light emitter means includes encoding means responsive to said electrical switch signals from said switches to produce corresponding optical signals for transmission across said gap, and
decoder means coupled to said light collector means and responsive to receipt of encoded optical signals to produce identifiable electrical input signals to said control means for operation of selected electrically controlled components corresponding to the switches which are manually engaged.

17. The electrical control assembly as defined in claim 13, and
light transmission means optically coupled to said light collection means and optically coupled to said control means,
said control means including a relay assembly having a plurality of relays, optical relay lens means coupled to said light transmission means for receipt of optical signals and mounted to said relay assembly for transmission of optical signals to each relay in said relay assembly, and a plurality of optical decoder means including one optical decoder optically coupled to said optical relay lens at each of said relays and responsive to detection of a selected encoded optical signal to operate said relay.

18. A method of controlling the operation of electrically controlled components of a vehicle from manually engageable switch means mounted on a rotatable steering wheel of said vehicle which comprises the steps of:
generating an optical signal upon manual engagement of said switch means; transmitting said optical signal from said rotatable steering wheel to a stationary portion of said vehicle; and
employing the transmitted optical signal to actuate control means for said components.

19. The method as defined in claim 18 wherein,
said generating step is accomplished by generating an optical signal in the infrared range.

20. The method as defined in claim 18 wherein,
said generating step is accomplished by generating an optical signal in the near-infrared range.

21. The method as defined in claim 18 wherein,
said transmitting step is accomplished by transmitting optical signals by an emitter mounted to said steering wheel and receiving transmitted optical signals by annular lens mounted concentrically to a stationary portion of said vehicle adjacent to said steering wheel.
